# EUROPEAN PATENT SPECIFICATION

(11) **EP 2 635 530 B1**
(45) Date of publication and mention of the grant of the patent: **01.10.2014**
(21) Application number: 11767271.7
(22) Date of filing: 11.10.2011
(51) Int. Cl.: C02F 1/00, C02F 1/50, C02F 1/68, B01F 15/04

(54) **A RESIDENCE TIME CHAMBER**
VERWEILZEITKAMMER
CHAMBRE DE TEMPS DE RÉSIDENCE

(30) Priority: 17.12.2010 EP 10195535; 01.11.2010 IN MU00302210
(43) Date of publication of application: 11.09.2013
(73) Proprietor: Unilever N.V., 3013 AL Rotterdam (NL); Unilever PLC, London EC4Y 0DN (GB)
(72) Inventor: DAVID CHANDRA, Franklin, Bangalore 560 066 (IN); RAJANARAYANA, Venkataraghavan, Bangalore 560 066 (IN)
(74) Representative: Rosen Jacobson, Frans Lucas M.
(86) International application number: PCT/EP2011/067737
(87) International publication number: WO 2012/059301

(56) References cited:
- EP-A1- 1 870 381
- WO-A1-99/29403
- GB-A- 728 217
- US-A- 4 199 001
- US-A- 5 810 043
- US-A1- 2008 217 258

## Description

### FIELD OF INVENTION

The present invention relates to a residence time chamber for improving the action of the biocide in water purification. According to another aspect the present invention relates to incorporating the residence time chamber in water purification devices, particularly to gravity-fed water purification devices that operate without electricity and pressurised water, but the invention may also be applicable to devices using electricity and pressurised water.

### BACKGROUND AND RELATED ART

Any discussion of the prior art throughout the specification should in no way be considered as an admission that such prior art is widely known or forms part of the common general knowledge in the field.

Various types of water purification devices have been described in literature, and several models are also available in markets. Some need electricity to function; examples include ultra violet (UV) based purifiers. Some purifiers do not need electricity to function. Such purifiers are also known as gravity-fed water purifiers.

A typical household gravity-fed water purifier has three chambers; a top chamber, a middle chamber and a bottom chamber. The top chamber is generally used for pre-filtration. Usually it has a sediment filter, such as a non-woven filter media or woven filter media, which traps some of the macroscopic impurities such as particles of dust and mud. The top chamber usually also has a carbon filter, either in the form of loose granules, or in the form of a compacted carbon block. The carbon filter helps trap organic impurities, chemicals, and malodorous compounds. Some carbon filters also filter out microorganisms, called cysts, which are Protozoans and these are larger than bacteria and viruses. Examples include Cryptosporidium parvum and Giardia lamblia. The middle chamber is generally used for disinfection of water.

Some modern filters, such as the one described in WO2004/000732 (Unilever) also uses a chemical purification agent, better known as biocide. An agent of choice is chlorine, generally in the form of tablets of TCCA (Tri chloro cyanuric acid).

Such tablets gradually release chlorine in water that kills most of the bacteria and viruses. The biocide is generally housed inside a cartridge.
The cartridge uses a precisely engineered chlorine (or other halogen) dispensing mechanism for dosing controlled amount of chlorine (or other halogen) into water. The bottom chamber is used for storage of purified water for consumption. The bottom chamber generally has a tap.

Various means of discharging the biocide into the water have been known in the art.
US2008/0217258 (PPA Water Industries Limited) discloses a chemical dispenser containing a water treatment substance and provides for a method of treating water. This application teaches a method of dispensing the active ingredient into a water body. Water enters the chemical dispenser through an aperture and comes in contact with the water treatment substance, and an active ingredient is dispersed at the first level of the water body for a period of time, and thereafter the dispenser is allowed to rise to a second higher level and the active ingredient is dispensed from the chemical dispenser into the second level of the water body for a further period of time.

US4199001 (Kratz, 1980) discloses a chemical feeder for use in dosing a liquid treatment material into a liquid circulating system. The application discloses chemical feeder having a container. The container has an internal divider for developing an upper compartment for supporting a supply of treatment chemical and a lower compartment for receiving a liquid solvent. The internal divider has orifices for permitting the liquid to rise upwardly for dissolution of the treatment material. The container has a first and second weir of different heights for controlling the level of liquid in the upper compartment and, hence, the concentration of the solution formed with control means for permitting optional usage of said weirs. The chemical feeder further includes a housing retaining a float valve that supportingly receives the lower portion of said container and is in communication therewith for accepting the formed solution. The housing has a discharge outlet for releasing the solution and controlled by a needle valve integral with said float valve.

WO99/29403 (Chengeta, 1999) discloses a dispenser for dosing measured quantity of granular chemical capable of releasing chlorine into swimming pool water at regular intervals. The application discloses a dispenser having a flow passage in communication with a venting chamber and a mixing chamber along the flow passage with the chambers connected together and the mixing chamber connected to the outlet of a measuring container having an inlet for connection to a supply of granulated chemical.

The mixing chamber includes valves ganged together to cause simultaneous closing of the inlet and opening of the outlet of the container on flow through the conduit and cessation of flow, respectively. Flow through the chambers is induced by formation of a low pressure zone at the outlet form the mixing chamber into the conduit.

These applications only teach of a method of dosing of biocide into water, it does not disclose of a residence chamber for providing a predetermined contact time between the active ingredient and the water.

WO2004/000732, also discloses that it is essential that the chemical purifying agent should be present in water to be purified for a desired residence time for the water to interact with the chemical thereby ensuring effective high microbiological purity. Another important aspect in water purification is that after the chemical purifying agent has acted to make the water microbiologically pure the excess chemical purifying agent and its by-products will have to be removed which is generally achieved by passing the water through a scavenger filter made up of activated carbon.

The flow of water is usually continuous and the water with the dosed biocide after it has been retained for a period of time flows through the scavenger filter and if more and more input water that needs to be purified is added it does not ensure that all the water receives the same residence time. The way the residence time is achieved in the prior art is by positioning the inlet of the pipes at the top and the water flows down through pipes into a common header which then leads to the scavenging unit. This construction makes it more expensive because of the requirement of more material of construction.

The present inventors have designed a residence time chamber by providing a simple actuator device, with a pre-adjusted residence time, which will ensure that all the input water to be purified receives sufficient residence time in presence of a biocide that is dosed into it and ensures good microbiological purity of water that is so purified. The residence time chamber designed according to the present invention may be adopted into any known water purification device by suitably modifying it.

The object of the present invention is to provide a residence time chamber where the biocide dosed into the water to be purified is kept in contact with the water for a predetermined period of time for the water to interact with the biocide thereby ensuring effective high microbiological purity.

The object of the present invention is to provide a residence time chamber that ensures required residence time in an economical and as a continuous process.

Yet another object of the invention is to provide a simple and cost effective gravity fed purification system that provides water with high microbial purity.

### SUMMARY OF THE INVENTION

According to a first aspect of the invention there is provided a residence time chamber (8) comprising:
(i) an inlet port (3);
(ii) an outlet port (14);
(iii) actuator device, comprising:
   a) fill cup (5) having a drain hole (13) at the bottom;
   b) a plunger; and
   c) resilience mechanism (7); and
      wherein one end of the plunger (6) is fixed to the bottom of the fill cup and the other free end (9) is aligned with the outlet port (14) ; and wherein the plunger closes the outlet port (14) by the mass of water inside the fill cup (5) upon filling thereof and wherein the flow rate of the fluid through the drain hole (13) is 0.1 to 500mL/min and wherein one end of the resilience mechanism (7) is fixed to the plunger and the other end is fixed to a plunger guide (10) and wherein the plunger guide (10) comprises a frame fixed to the residence time chamber (8) encircling the plunger through which the free end of the plunger aligns with the outlet port (14).

According to another aspect of the invention there is provided a water purification device comprising:
I. an inlet chamber (1) in fluid communication with a
II. a biocide dosing device (4) in fluid communication with the inlet port (3) of
III. the residence time chamber comprising;
   (i) an inlet port (3);
   (ii) an outlet port (14);
   (iii) actuator device, comprising:
      a) fill cup (5) having a drain hole (13) at the bottom;
      b) a plunger; and
      c) resilience mechanism (7); and
         wherein one end of the plunger (6) is fixed to the bottom of the fill cup and the other free end (9) is aligned with the outlet port (14) ; and wherein the plunger closes the outlet port (14) by the mass of water inside the fill cup (5) upon filling thereof and wherein the flow rate of the fluid through the drain hole (13) is 0.1 to 500mL/min and wherein one end of the resilience mechanism (7) is fixed to the plunger and the other end is fixed to a plunger guide (10) and wherein the plunger guide (10) comprises a frame fixed to the residence time chamber (8) encircling the plunger through which the free end of the plunger aligns with the outlet port (14).
IV. wherein the outlet port (14) of the residence time chamber is in fluid communication with
V. a scavenger filter (11); in fluid communication with a
VI. storage chamber (12).

### DETAILED DESCRIPTION OF THE INVENTION

One aspect of the present invention provides for a residence time chamber where the biocide dosed into the water to be purified is kept in contact with the water for a predetermined period of time for the water to interact with the biocide thereby ensuring effective high microbiological purity.

Another aspect of the present invention provides for a water purification device comprising an inlet chamber, biocide dosing device, residence time chamber, scavenger filter and a storage chamber.

### Inlet Chamber

The inlet chamber is designed to receive input water that needs to be purified and the inlet chamber has a predetermined maximum capacity as set by the volume of the inlet chamber. The inlet chamber has a capacity to hold preferably 1 to 8 litres, more preferably 1 to 6 litres, most preferably 1 to 4 litres of a liquid such as water.

The bottom of the inlet chamber includes a biocide dosing device in fluid communication with the top of the residence time chamber.

### Biocide dosing device

The biocide dosing device may dispense either liquid or solid biocide. Preferably the biocide is present in solid form and leaches into the water at a controlled rate when the water contacts the surface of the solid. More preferably the solid is in the form of tablets. It is preferred that the biocide is a chemical that delivers available halogen to the water to ensure kill of the microorganisms.

The most commonly used biocides are halide based biocides, including chlorine, fluorine, bromine and iodine based biocides.

Typical chlorine based biocides include chlorinated trisodium phosphate, Sodium or Potassium or calcium hypochlorite, the various N-chlorinated compounds known in the art to release active chlorine such as sodium or potassium dichloroisocyanurate, trichlorocyanuric acid, monochloramine, dichloramine, [(monotrichloro)- tetra(monopotassium dichloro)] pentaisocyanurate, 1,3-dichloro-5,5-dimethylidanotone, Chloramine T, p-toluene-sulfodichloroamide, thrichloromelamine, N-chloramine, N-chlorosuccinimide, N,N'-dichloroazodicarbonamide, N-chloroacetyl-urea, N,N-dichloroazo-dicarbonamide, N-chloroacetyl-urea,N,N-dichlorbiurile,chlorinated dicyandiamide.

A combination of bromine and chlorine based biocides is preferred and the preferred combination is bromochlorodimethylhydantoin (BCDMH) and trichloroisocyanuric acid (TCCA) or sodium dichloroisocyanurate (NaDCC) or mixtures thereof in suitable ratios. The preferred ratio of BCDMH and TCCA or NaDCC is in the range 85:15 to 65:35.

Alternatively, the biocide may be dispensed in the form of a predefined dose, suitable for disinfecting one batch of water. This may be done in the form of loose powder, small tablets or granules.

### Residence time chamber

The residence time chamber is designed to provide sufficient residence time so that all the input water having the biocide that is dosed into it has sufficient time to act on the microbes ensuring good microbiological purity of water that is so purified.

The residence time chamber includes an inlet port through which the water dosed with a biocide, from the inlet chamber flows into the residence time chamber and an outlet port through which the water flows out of the residence time chamber and flows into the scavenger filter. The residence time chamber includes an actuator device to provide an automatically operating mechanism to ensure that the biocide in contact with the water to be purified is retained in the residence time chamber for a pre-determined period of time i.e. there is sufficient residence time for the interaction of the biocide on the microbes in the water to provide high microbiological purity and preferably an overflow port for the exit of the excess water which may accumulate in the residence time chamber.

The inlet port is an aperture in fluid communication with the inlet chamber situated at the top of the residence time chamber. The inlet port diameter may be 1 to 8 mm, more preferably from 1 to 6 mm and the most preferred inlet port diameter being 2 to 5 mm. The fluid mixed with desired level of biocide concentration dwells in the residence time chamber for a predetermined time that is automatically pre-adjusted by the operating mechanism of the actuator device.

The actuator device includes of a fill cup and a plunger. The fill cup has a fixed capacity and preferably designed to hold a fluid volume of 10 to 500 mL, more preferably 20 to 300 mL and most preferably a volume of 30 to 100 mL. The walls rising from the bottom of fill cup surrounds the cavity in the interior of the fill cup and separates it from the cavity of the residence time chamber. The drain hole at bottom of the fill cup allows fluid to flow out of the fill cup into the cavity of the residence time chamber. Aperture size of the drain hole is preferably 100 micrometers to 5000 micrometers, more preferably 150 micrometers to 3000 micrometers and most preferably 300 micrometers to 1000 micrometers.

The flow of fluid through the drain hole is at a rate of 0.1 to 500 mL/min, more preferably at a rate of 0.8 to 15 mL/min and most preferably at a rate of 1 to 10 mL/min. The residence time can be pre-adjusted by suitably modifying the ratio between the volume of the fill cup and the drain flow rate from the fill cup into the residence time chamber.

The residence time is preferably in the range of 1 to 100 minutes, more preferably 20 to 60 minutes, still more preferably 5 to 30 minutes.

The fill cup is attached to the fixed end of the plunger. The other free end of the plunger is aligned along with the outlet port of the residence time chamber. The closing and opening of the outlet port is by the downward and upward movement of the free end of the plunger and this movement ensures appropriate residence time. The outlet port provided opens after one batch of water has received the required residence time and closes automatically if another batch of water is added sometime in between.

The plunger of the actuator device has a resilience mechanism and one end of the resilience mechanism is fixed to the plunger and the other end is fixed a plunger guide to ensure the functioning of the resilience mechanism. The resilience mechanism gets compressed when the fill cup is filled with water and the outlet port is closed. The resilience mechanism relaxes to open the outlet port when the fill cup is empty. The resilience mechanism is preferably a spring. The spring may be in the form of a "U" shaped spring or a coil spring. The spring is preferably made of any food grade material. The spring is preferably made of a polymeric material and more preferably an acrylic polymeric material.

The downward and upward movement of the free end of the plunger is guided by a plunger guide that can be of any shape. The plunger guide includes a frame fixed to the residence time chamber encircling the plunger. It aligns the plunger to the outlet port by providing a defined path for the vertical movement of plunger during the opening and closing of the outlet port.
The resilience mechanism of the actuator device is fixed to the plunger and the other end is fixed to the plunger guide.

It would be clear that the other end of the resilience mechanism is not fixed to the plunger itself for the functioning of the resilience mechanism. The other end of the resilience mechanism is fixed to the plunger guide.

The resilience mechanism along with the plunger and the fill cup provides a way to automatically operate the opening and closing of the outlet port. The resilience mechanism is compressed by the weight of the liquid in the fill cup allowing the plunger to close the outlet port and when the fill cup is empty it relaxes allowing the plunger to open the outlet port. It is preferred that the geometric shape of the cross section of the plunger and the outlet port match so that the fitment of the plunger into the outlet port is exact in order to achieve complete closure of the outlet port by the plunger. It is also preferred that the free end of the plunger tip is provided an elastomeric material such as rubber, silicone, viton etc and that the outlet port is provided with a thin annular ridge (lip) around it such that the elastomeric tip of the free end of the plunger sits over the ridge to facilitate water tight closure of the outlet port.

Preferably the residence time chamber is provided with an overflow port. The overflow port located on the walls of the residence time chamber is an aperture allowing the excess volume of water that may accumulate in the residence time chamber to flow out of the residence time chamber when the outlet port is closed. The overflow port is situated on the walls of the residence time chamber positioned below the hole at the bottom of the fill cup and above the outlet port. Further preferably, the overflow port is at a height less than 50% of the length of the plunger from the fixed end. It is still preferred that the overflow port is at a height less than 10% of the length of the plunger from the fixed end. It is most preferred that the overflow port is at a height of less than 5% of the length of the plunger from the fixed end. Here, the height of the overflow port is preferably the height with respect to the fixed end of the plunger in its rest position.

### Sediment filter

The sediment filter is provided to remove the particulates in the input water and may be provided at the top of the inlet chamber such that the input water enters the inlet chamber after passing through the sediment filter. Alternatively, the sediment filter may be provided such that the water from the residence time chamber passes through the sediment filter before entering the scavenger filter.

The sediment filter is preferably a washable or replaceable fabric filter for removing fine dust and other micro-particulates. The sediment filter may be a non-woven fabric preferably a microporous fabric. The sediment filter removes particles of size up to 100 micrometers.

### Scavenges filter

The scavenger filter is made of a suitable material such as carbon, in the form of powder or granules and compressed into an appropriate shape. The scavenger filter is preferably a carbon filter and more preferably in the form of a cast block. The scavenger filter is preferably a bacteriostatic activated carbon filter.

Preferably the nature of the carbon may be such that it is suitable for allowing for maximum adsorption and the particle size of the carbon may be so chosen to allow for designing the requisite pore size for effective filtration, when bound together. The material in the block is held together by a binder, which may be a suitable polymer that may be blended with the carbon and heat treated under pressure to sinter the carbon into a block. Preferably the dimension of the block may be chosen to allow for a requisite interaction time for the water with the block to allow for filtration of particles as well as adsorption of organic species on the internal surface of the block. Such suitable carbon blocks are disclosed in WO2007/147716, WO2010/020513 and WO2010/043472; all incorporated herein by reference.

The scavenger filter is capable of removing colloidal particles and cysts, organic materials, the biocide and biocide by-products.

The fluid from the scavenger filter flows into the storage chamber.

### Storage chamber

The purified water flowing out from the scavenger filter is preferably collected in the storage chamber. The water collected in the storage chamber is free of particulates, organics, residual biocide and its by-products and microbiologically safe. The outlet of the device is positioned on the walls of the storage chamber and may be used for tapping purified water from the system.

### Closing and opening mechanism of the Actuator Device

The input water mixed with the biocide at the biocide dosing device enters the residence time chamber through the inlet port at the top of the chamber and fills the fill cup of the actuator device. Since input flow rate is preferably several times (5 to 20 times) higher than the drain flow rate of the fill cup, it fills in a short time and then over flows from the sides of the fill cup into the residence time chamber. The weight of water in the fill cup compresses the resilience mechanism wound on the plunger of the actuator device pushing the plunger vertically down. The free end of the plunger enters the aperture of the outlet port thereby closing it. When input water stops, the volume of water in the fill cup leaves it through a drain hole at the bottom of the fill cup at a predetermined rate into the cavity of the residence time chamber. This reduces the load of the fill cup. When the fill cup is almost empty, the weight of the water cannot keep the resilience mechanism compressed and therefore the resilience mechanism is released, pulling the plunger vertically upwards. The free end of the plunger moves out of the aperture of the outlet port thereby opening it.

Any intermittent additional batch of water added during the purification cycle closes the outlet port by a similar mechanism. A batch cycle ensures that all the water entering the water purification device receives sufficient residence time, ensuring effective high microbiological purity.

### Water purification method

The invention further provides a method for purifying water having the steps of filling the water to be purified into the inlet chamber of the device according to the invention; the inlet chamber being in fluid communication with a biocide dosing device wherein a biocide is released into the water; the biocide dosing device being in fluid communication with a residence time chamber where it is held for a time period in the range of 1 to 100 minutes by means of an automatically operating actuator device; the residence time chamber being in fluid communication with the outlet port for releasing the water into a storage chamber through a scavenger filter for the removal of excess biocide and its byproducts present in the water flowing out from the residence time chamber.

### BRIEF DESCRIPTION OF THE FIGURES

A preferred embodiment of the invention will now be described by way of examples only, with reference to the accompanying drawings in which:
Figure 1 is a sectional view of the water purification device according to the invention, showing the plunger of the actuator device in the closed position.
Figure 2 is a sectional view of the water purification device according to the invention, showing the plunger of the actuator device in the open position.

### DETAILED DESCRIPTION OF THE FIGURES

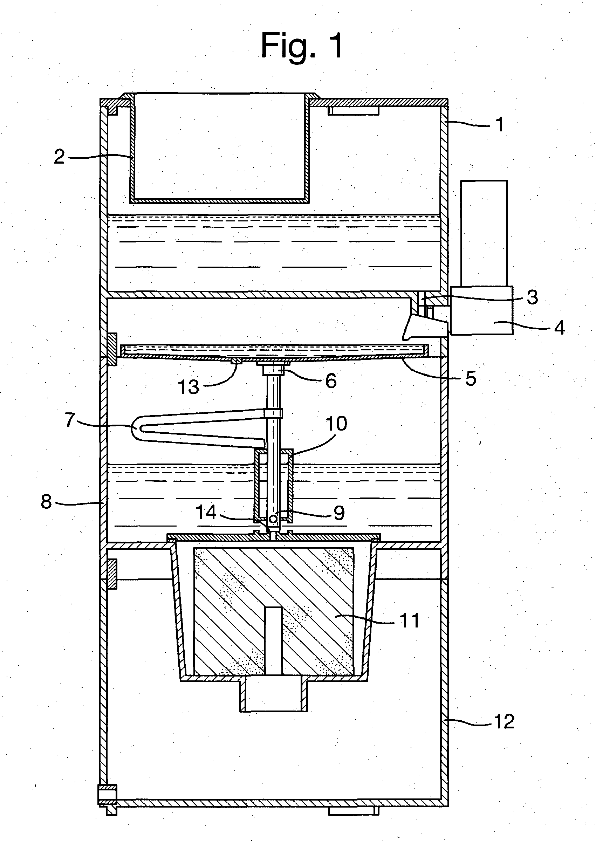

In Figure 1 a water purification device with the plunger of the actuator device in the closed position according to the invention is shown. Situated at the top of the inlet chamber (1) is a sediment filter (2) to remove the particulate matter from input water that has to be purified. At the bottom of the inlet chamber is a biocide dosing device (4) in fluid communication with the inlet port (3) of the residence time chamber (8). Water entering through the inlet port (3) flows into the fill cup (5) of the actuator device housed inside the residence time chamber (8). At the bottom of the fill cup is a drain hole (13) through which water drains into the cavity of the residence time chamber (8). The fixed end of the plunger (6) is attached to the bottom of the fill cup (5). When the fill cup receives sufficient amount of water, the resilience mechanism (7) attached to the plunger gets compressed and pushes the free end of the plunger (9) downwards. The plunger moves downwards along a predefined path provided by the plunger guide (10) and closes the opening of the outlet port (14) of the residence time chamber (8). The outlet port is in fluid communication with the scavenger filter (11). The water flows from the scavenger filter (11) into the storage chamber (12).

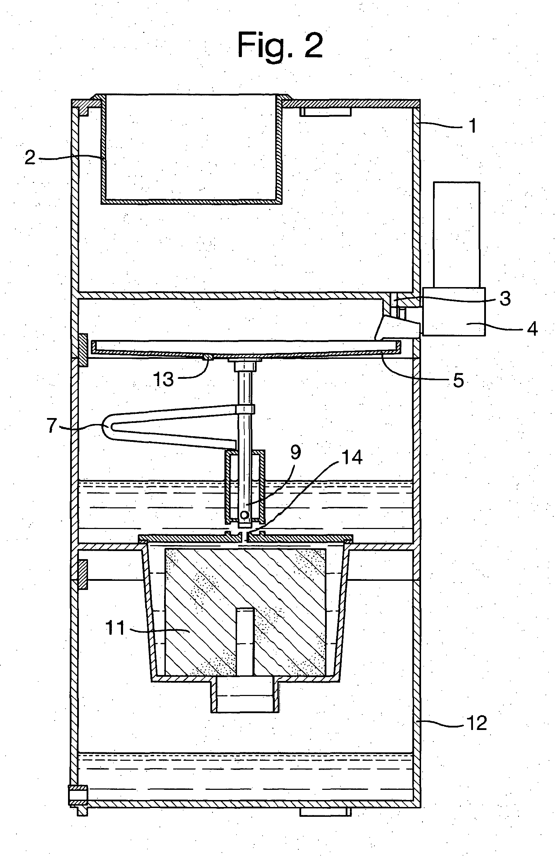

Figure 2 shows the water purification device as described in Figure 1 having the plunger of the actuator device in the open position. Water in the fill cup (5) flows through the drain hole (13) at the bottom of the fill cup (5) and emptying of the fill cup releases the resilience mechanism (7) which in turn pulls the free end of the plunger (9) upwards and opens the outlet port (14).

The water flows from the residence time chamber through the open outlet port into the scavenger filter (11), and after filtration through the scavenger filter (11) flows into the storage chamber (12).

The invention will now be demonstrated with examples. The examples are by way of illustration only and do not limit the scope of the invention in any manner.

### EXAMPLES

### Example 1: Evaluation of Efficiency of Water Purification Device for Reduction of Turbidity

Efficiency of the water purification device in removing particulates and turbidity were determined by using the actuator device as described in Figure 1 and was compared with a manual delay device.

In a manual delay device the outlet port is opened or closed by a manual valve kept at the bottom of residence time chamber. Before pouring water into the device the manual valve was kept in closed position. Water poured into top chamber flowed through biocide dosing device and then into the residence time chamber. After residence time chamber was filled, the water was kept for required residence time after which the manual valve was opened to permit the water from residence time chamber to flow through scavenger filter then into the storage chamber.

### i. Procedure for measurement of Turbidity:

Test water (3L) comprising of particulates, organic matter and salts was poured into the sediment filter provided in the inlet chamber. During the flow cycle, water flowed through the sediment filter at the top of the inlet chamber where the particulate matter was removed. The water from the inlet chamber flowed through the biocide dosing device containing a combination of bromochlorodimethylhydantoin (BCDMH) and trichloroisocyanuric acid (TCCA) as the biocide into the residence time chamber. The water was released by the opening of the outlet port by the actuator device from the residence time chamber through the scavenger filter and into the storage chamber.

Samples of water from 3 different stages namely a sample of water before pouring into the sediment filter (input water), sample of water after flowing through the sediment filter and a sample of water after flowing through the scavenger filter were collected and the turbidity was measured using a turbidity meter.

The data on turbidity and scavenging efficiency are provided in Table 1.

**Table 1**

| Turbidity (NTU) | | | | | |
|---|---|---|---|---|---|
| Manual delay device | | | Actuator device | | |
| Input Test water | Turbidity in residence chamber | Turbidity in Storage chamber | Input Test water | Turbidity in residence chamber | Turbidity in storage chamber |
| 20.6 | 7.83 | 0.19 | 20.6 | 3.4 | 0.04 |
| 20.8 | 6.5 | 0.06 | 20.8 | 3.82 | 0.05 |

The data in table 1 indicate that the actuator device is comparable to manual delay valve in reducing the turbidity of input water.

### Example 2: Evaluation of Efficiency of Scavenger filter for removal of Residual biocide

Efficiency of the actuator device in scavenging residual biocide was determined by using the water purification device as described in Figure 1. The results were compared against the efficiency of the manual delay device described in Example 1 in scavenging residual biocide.

### ii. Procedure for evaluation of scavenger filter efficiency for removal of biocide:

Experimental procedure was same as described in Example 1 for turbidity measurement. Samples of water were collected from 2 different stages, namely a sample of water after flowing through the biocide dosing device and a sample of water after flowing through the scavenger filter and the level of biocide was measured using a chlorine meter (Extech CL200).

The meter does not enunciate the difference between bromine or chlorine as a biocide, but expresses the halogen content in terms of equivalent chlorine concentration, in ppm.

The data on scavenging efficiency are provided in Table 2.

**Table 2**

| Biocide level (ppm) | | | |
|---|---|---|---|
| Manual delay device | | Actuator device | |
| Before Scavenger Filter | After Scavenger Filter | Before Scavenger Filter | After Scavenger Filter |
| 2.36 | 0 | 2.67 | 0 |

The data in table 2 indicate that the actuator device is comparable to manual delay device in term of biocide scavenging efficiency from input water.

From the results in Table 1 and Table 2, it is clear that the water purification device according to the present invention achieves reduction in the turbidity level and efficiently scavenges residual biocide in the downstream water. A significant reduction in the turbidity levels is seen in water sample collected after sediment filter in the residence time chamber and a further reduction is observed in the turbidity of water after passing through the scavenger filter. The reduction in the turbidity level indicates removal of the particulates from the input water producing clear output water. The results also confirm the presence of requisite amount of biocide (for disinfection) in the residence time chamber as shown by the concentration of equivalent chlorine in the water before it flows through the scavenger filter. Further a comparison of the biocide content in the water before water passes through the scavenger filter and after water passes through the scavenger filter showed a reduction in the concentration of biocide in the water after the scavenger filter confirming the scavenging efficacy of the scavenger filter in removing residual biocide from the output water.

### Example 3: Determination of the efficiency of Actuator Device in Providing Optimum Residence Time

3L of water was poured into the inlet chamber of the water purification device as described in Figure 1 of the invention. The opening and closing of the actuator device during the water flow cycle was observed. It was seen that immediately after the water flows into the fill cup the plunger of the actuator device closed the outlet port. The start of residence time (t1) for the entire batch was recorded when all the water had flowed out of the inlet chamber. When most the water had drained from the fill cup into the residence chamber, the plunger of the actuator device moved up and the outlet port opened. The time at which the outlet port opened was recorded as (t2). The difference in the time (t2-t1) was calculated as the residence time.

In another experiment the 3 litres of water was added in two batches of 2 litres and 1 litre. First the 2 litres of water was poured into the inlet chamber of the water purification device as described in Figure 1 of the invention. The start of residence time (tA1) for the entire batch of 2 litres was recorded when all the water had flowed out of the inlet chamber. When most the water had drained from the fill cup into the residence chamber, the plunger of the actuator device moved up and the outlet port opened. The time at which the outlet port opened was recorded as (tA2). The difference in the time (tA1-tA2) was calculated as the residence time for the input water of 2 litres. At time tA2, when the outlet port was in the fully open position an additional batch of 1 litre of water was added to the inlet chamber. This closed the outlet port. The time (tB1) was recorded when all the water from inlet chamber had flowed out of the inlet chamber. When most the water had drained from the fill cup into the residence chamber, the plunger of the actuator device moved up and the outlet port opened. The time (tB2) when the outlet port opened was also recorded. The difference in the time (tB1-tB2) was calculated to determine the residence time for the input water of 1 litre added in the second batch. The residence time achieved in the above mentioned process when the additional water was added before the completion of the previous cycle was compared to the residence time obtained when all the 3 litres of water was added in one cycle. The observations are tabulated in Table 3.

**Table 3**

| Experiment No. | Residence time (in min) for single batch of | Residence time (in min) when 3 litre water is added in 2 sub batches of | |
|---|---|---|---|
| | 3 litres | 2 litres | 1 litre |
| 1 | 9 | 7 | 8 |
| 2 | 8 | 8 | 8 |

The data in Table 3 indicates that the actuator device provides every batch of water with the predetermined residence time, irrespective of the time elapsed since the addition of the previous batch of water. It is also seen that the residence time provided is irrespective of the batch volume.

## Claims

1. A residence time chamber (8) comprising:
(i) an inlet port (3);
(ii) an outlet port (14);
(iii) actuator device, comprising:
a) fill cup (5) having a drain hole (13) at the bottom;
b) a plunger; and
c) resilience mechanism (7); and
wherein one end of the plunger (6) is fixed to the bottom of the fill cup and the other free end (9) is aligned with the outlet port (14); and wherein the plunger closes the outlet port (14) by the mass of water inside the fill cup (5) upon filling thereof and wherein the flow rate of the fluid through the drain hole (13) is 0.1 to 500mL/min and wherein one end of the resilience mechanism (7) is fixed to the plunger and the other end is fixed to a plunger guide (10) and wherein the plunger guide (10) comprises a frame fixed to the residence time chamber (8) encircling the plunger through which the free end of the plunger aligns with the outlet port (14).

2. A residence time chamber as claimed in claim 1 wherein the resilience mechanism (7) is a spring.

3. A residence time chamber as claimed in claim 1 or 2 wherein the wall of the residence time chamber (8) comprises a water overflow port positioned below the drain hole (13) at the bottom of the fill cup (5) and above the outlet port (14).

4. A residence time chamber as claimed in claim 3 wherein the water overflow port is at a height that is less than 50% of the length of the plunger from the fixed end.

5. A residence time chamber as claimed in claim 3 or 4 wherein the water overflow port is at a height that is less than 10% of the length of the plunger from the fixed end.

6. A residence time chamber as claimed in claim 1 wherein the capacity of the fill cup (5) is in the range10 to 500 mL.

7. A water purification device comprising:
(i) an inlet chamber (1) in fluid communication with a
(ii) a biocide dosing device (4) in fluid communication with the inlet port (3) of
(iii) the residence time chamber according to any one of claims 1 to 6;
(iv) wherein the outlet port (14) of the residence time chamber is in fluid communication with
(v) a scavenger filter (11); in fluid communication with a
(vi) storage chamber (12).

## Patentansprüche

1. Verweilzeitkammer (8), die Folgendes umfasst:
(i) einen Einlassanschluss (3);
(ii) einen Auslassanschluss (14);
(iii) eine Betätigungsvorrichtung, die Folgendes umfasst:
(a) einen Füllbecher (5) mit einem Abflussloch (13) im Boden;
(b) einen Kolben; und
(c) einen Elastizitätsmechanismus (7); und
wobei ein Ende des Kolbens (6) am Boden des Füllbechers befestigt ist und das andere, freie Ende (9) auf den Auslassanschluss (14) ausgerichtet ist; und wobei der Kolben den Auslassanschluss (14) durch die Masse des Wassers im Inneren des Füllbechers (5) während des Befüllens verschließt und wobei die Durchflussmenge des Fluids durch das Abflussloch (13) 0,1 bis 500 ml/min beträgt und wobei ein Ende des Elastizitätsmechanismus (7) an dem Kolben befestigt ist und das andere Ende an einer Kolbenführung (10) befestigt ist und wobei die Kolbenführung (10) einen Rahmen umfasst, der an der Verweilzeitkammer (8) befestigt ist, die den Kolben umgibt, durch den das freie Ende des Kolbens auf den Auslassanschluss (14) ausgerichtet ist.

2. Verweilzeitkammer nach Anspruch 1, wobei der Elastizitätsmechanismus (7) eine Feder ist.

3. Verweilzeitkammer nach Anspruch 1 oder 2, wobei die Wand der Verweilzeitkammer (8) einen Wasserüberlaufanschluss umfasst, der unter dem Abflussloch (13) am Boden des Füllbechers (5) und über dem Auslassanschluss (14) positioniert ist.

4. Verweilzeitkammer nach Anspruch 3, wobei sich der Wasserüberlaufanschluss auf einer Höhe befindet, die weniger als 50 % der Länge des Kolbens von dem befestigten Ende beträgt.

5. Verweilzeitkammer nach Anspruch 3 oder 4, wobei sich der Wasserüberlaufanschluss auf einer Höhe befindet, die weniger als 10 % der Länge des Kolbens von dem befestigten Ende beträgt.

6. Verweilzeitkammer nach Anspruch 1, wobei das Fassungsvermögen des Füllbechers (5) im Bereich zwischen 10 und 500 ml liegt.

7. Wasserreinigungsvorrichtung, die Folgendes umfasst:
(i) eine Einlasskammer (1) in Fluidverbindung mit einer
(ii) Biozid-Dosierungsvorrichtung (4) in Fluidverbindung mit dem Einlassanschluss (3) der
(iii) Verweilzeitkammer nach einem der Ansprüche 1 bis 6;
(iv) wobei der Auslassanschluss (14) der Verweilzeitkammer in Fluidverbindung ist mit
(v) einem Nachreinigungsfilter (11); in Fluidverbindung mit einer
(vi) Speicherkammer (12).

## Revendications

1. Chambre de temps de résidence (8) comprenant :
(i) un orifice d'entrée (3) ;
(ii) un orifice de sortie (14) ;
(iii) un dispositif d'actionneur, comprenant :
a) un godet de remplissage (5) comportant un trou de drainage (13) au fond ;
b) un plongeur ; et
c) un mécanisme de résilience (7) ; et
dans laquelle une extrémité du plongeur (6) est fixée sur le fond du godet de remplissage et l'autre extrémité libre (9) est alignée avec l'orifice de sortie (14) ; et dans laquelle le plongeur ferme l'orifice de sortie (14) par la masse d'eau à l'intérieur du godet de remplissage (5) lors du remplissage de celui-ci et dans laquelle le débit d'écoulement du fluide à travers le trou de drainage (13) est de 0,1 à 500 ml/min et dans laquelle une extrémité du mécanisme de résilience (7) est fixée sur le plongeur et l'autre extrémité est fixée sur un guide de plongeur (10) et dans laquelle le guide de plongeur (10) comprend un cadre fixé sur la chambre de temps de résidence (8) encerclant le plongeur par l'intermédiaire duquel l'extrémité libre du plongeur est alignée avec l'orifice de sortie (14).

2. Chambre de temps de résidence selon la revendication 1 dans laquelle le mécanisme de résilience (7) est un ressort.

3. Chambre de temps de résidence selon la revendication 1 ou 2 dans laquelle la paroi de la chambre de temps de résidence (8) comprend un orifice de débordement d'eau positionné sous le trou de drainage (13) au fond du godet de remplissage (5) et au-dessus de l'orifice de sortie (14).

4. Chambre de temps de résidence selon la revendication 3 dans laquelle l'orifice de débordement est à une hauteur qui est inférieure à 50% de la longueur du plongeur depuis l'extrémité fixe.

5. Chambre de temps de résidence selon la revendication 3 ou 4 dans laquelle l'orifice de débordement est à une hauteur qui est inférieure à 10% de la longueur du plongeur depuis l'extrémité fixe.

6. Chambre de temps de résidence selon la revendication 1 dans laquelle la capacité du godet de remplissage (5) est dans une plage de 10 à 500 ml.

7. Dispositif de purification d'eau comprenant :
(i) une chambre d'entrée (1) en communication fluide avec
(ii) un dispositif de dosage de biocide (4) en communication fluide avec l'orifice d'entrée (3) de
(iii) la chambre de temps de résidence selon l'une quelconque des revendications 1 à 6 ;
(iv) dans laquelle l'orifice de sortie (14) de la chambre de temps de résidence est en communication fluide avec
(v) une filtre épurateur (11) ; en communication fluide avec
(vi) une chambre de stockage (12).
